# EUROPÄISCHE PATENTANMELDUNG

(11) **EP 1 298 293 A2**
(43) Veröffentlichungstag der Anmeldung: **02.04.2003**
(21) Anmeldenummer: 02450210.6
(22) Anmeldetag: 19.09.2002
(51) Int. Cl.: F02B 1/12, F01L 13/00

(54) **Verfahren zum Geregelten Betrieb einer Brennkraftmaschine**

(30) Priorität: 28.09.2001 AT 7492001 U
(71) Anmelder: AVL List GmbH, 8020 Graz (AT)
(72) Erfinder: Fürhapter, Alois, Dipl.-Ing., 8020 Graz (AT); Unger, Eduard, Dipl.-Ing., 8430 Leibnitz (AT)
(74) Vertreter: Babeluk, Michael, Dipl.-Ing. Mag.

(57) **Zusammenfassung**

Die Erfindung betrifft ein Verfahren zum geregelten Betrieb einer Brennkraftmaschine, welche zumindest in einem Motorbetriebsbereich homogen selbstgezündet betrieben wird, wobei der Verbrennungsablauf durch Messen zumindest einer verbrennungsrelevanten Kenngröße aus der Gruppe Verbrennungsbeginn, Verbrennungsdauer und Verbrennungsrate überwacht und ausgewertet wird, und aufgrund der Verbrennungsauswertung zumindest ein verbrennungsrelevanter Parameter für die nächstfolgenden Verbrennungen geregelt wird. Um auf möglichst einfache Weise die Verbrennung im homogenen Selbstzündungsbetrieb zu stabilisieren, ist vorgesehen, dass zur Regelung der Verbrennung das Turbulenzniveau im Brennraum verändert wird, wobei zur Stabilisierung der Verbrennung das Turbulenzniveau kurzfristig erhöht wird.

## Beschreibung

Die Erfindung betrifft ein Verfahren zum geregelten Betrieb einer Brennkraftmaschine, welche zumindest in einem Motorbetriebsbereich homogen selbstgezündet betrieben wird, wobei der Verbrennungsablauf durch Messen zumindest einer verbrennungsrelevanten Kenngröße aus der Gruppe Verbrennungsbeginn, Verbrennungsdauer und Verbrennungsrate überwacht und ausgewertet wird, und aufgrund der Verbrennungsauswertung zumindest ein verbrennungsrelevanter Parameter für die nächstfolgenden Verbrennungen geregelt wird.

Die Verbrennung eines durch Selbstzündung entflammten mageren Kraftstoff/Luft-Gemisches hat den Vorteil, dass wegen der homogenen Konzentrations- und Temperaturverteilung äußerst niedrige Emissionswerte für NOₓ und Ruß erzielt werden. Dieses Verfahren wird im englischen Sprachraum als "HCCI-Verfahren" (**H**omogenous **C**harge **C**ompression **I**gnition) bezeichnet. Der geringe Gehalt an NOₓ-Abgas resultiert beim HCCI-Verfahren daher, dass die Verbrennung an einer Vielzahl von Zündorten beginnt, wodurch die Verbrennung mit relativ geringer Verbrennungstemperatur abläuft. Benzin hat für das HCCI-Verfahren wegen seiner sehr niedrigen Selbstzündungswilligkeit und des niedriger liegenden Siedebereiches zwischen etwa 30° und 190° große Vorteile gegenüber Dieselkraftstoff. Das Verdichtungsverhältnis kann hier, ähnlich wie beim Dieselmotor, auf Werte von etwa 15 bis 17 angehoben werden.

Bei einer mit Selbstzündung betriebenen Otto-Brennkraftmaschine kann der Zeitpunkt der Gemischentzündung nicht mehr wie bei einer Otto-Brennkraftmaschine mit Fremdzündung durch das eigentliche Zündereignis an der Zündkerze eingeleitet werden, sondern für die Einleitung der Verbrennung ist bei dieser Betriebsart nur mehr die Zylinderladung und speziell die Ladungszusammensetzung im Brennraum wie Druck, Temperatur und Luft-/Kraftstoffverhältnis λ von Bedeutung.

Bei der Brennkraftmaschine mit Kompressionszündung wird die Zündung des Luft/Kraftstoff-Gemisches durch Erhöhen der Temperatur und des Drucks im Brennraum während der Kompressionsphase bewirkt. Damit die Zündung aber auch tatsächlich auftritt, muss die Zylinderladung beim Start der Kompressionsphase richtig konditioniert sein. Einen wesentlichen Einfluss auf den Start der Verbrennung haben dabei das Verdichtungsverhältnis ε der Brennkraftmaschine, sowie die Mischtemperatur T_{misch} der Zylinderladung zu dem Zeitpunkt, bei dem alle Gaswechselventile geschlossen sind und die Kompressionsphase beginnt. Der Vorteil eines hohen Verdichtungsverhältnisses besteht darin, dass die Ladungstemperaturen zu Beginn des Kompressionstaktes nicht so hoch sein müssen, da aufgrund des kleineren Endkompressionsvolumens höhere Endtemperaturen erreicht werden können.

Eine Möglichkeit zur Beeinflussung der Verbrennung besteht in der Änderung der Ansauglufttemperatur, die im Wesentlichen die Ladungstemperatur im Zylinder beeinflusst. Der Zusammenhang ist der, dass die Lage der Verbrennung immer weiter in Richtung des oberen Totpunktes der Zündung wandert, je höher die Ansauglufttemperatur und in weiterer Folge auch die Mischtemperatur der Zylinderladung zu Beginn der Kompressionsphase ist. Um unter normalen Randbedingungen, das heißt bei Ansauglufttemperaturen von etwa 25°C bis 30°C einen HCCI-Motorbetrieb zu ermöglichen, sind sehr hohe Abgasrückführraten in der Größenordnung von über 50% notwendig, um entsprechende Startbedingungen für die Zylinderladung zu schaffen.

In den Veröffentlichungen WO 98/07973 A1 und WO 98/10179 A2 sind Verfahren zur Verbrennungsregelung bei homogen selbstgezündet betriebenen Brennkraftmaschinen geoffenbart.

Aufgabe der Erfindung ist es, bei einer mit homogen selbstzündbarem Kraftstoff/Luft-Gemisch betriebenen Brennkraftmaschine ein einfaches Verfahren zur Steuerung des Verbrennungsablaufes vorzuschlagen.

Erfindungsgemäß wird dies dadurch erreicht, dass zur Regelung der Verbrennung das Turbulenzniveau im Brennraum verändert wird, wobei zur Stabilisierung der Verbrennung das Turbulenzniveau kurzfristig erhöht wird.

In einer besonders einfachen Ausführungsvariante der Erfindung ist vorgesehen, dass zur Erhöhung des Turbulenzniveaus der Öffnungszeitpunkt zumindest eines Einlassventils in Richtung des oberen Totpunktes der Zündung verschoben wird. Die Erfindung macht sich dabei die Tatsache zu Nutze, dass beim frühen Öffnen des Einlassventils die Verbrennung wesentlich später abläuft, als beim späten Öffnen des Einlassventils, wenn alle anderen Parameter konstant gehalten werden. Die Stabilisierung der Verbrennung über das Turbulenzniveau eignet sich besonders, um im dynamischen Betrieb einen schnellen Betriebspunktwechsel, etwa vom homogenen Fremdzündungsbetrieb in den homogenen Selbstzündungsbetrieb, durchführen zu können. Um dies zu ermöglichen, ist ein Verbrennungsregler vorgesehen, der sicherstellt, dass in jedem Motorzyklus eine Verbrennung stattfindet. Dabei wird als Maß für die Lage der letzten Verbrennung eine verbrennungsrelevante Kenngröße, vorzugsweise der 50%-Massenumsatzpunkt, einem Verbrennungsregler zugeführt und zur Stabilisierung der Verbrennung primär der Öffnungszeitpunkt des Einlassventils beeinflusst. Alternativ dazu ist es aber möglich, das Turbulenzniveau auch durch Verschiebung der Ventilüberschneidung oder aber auch durch Verschiebung der Steuerzeit des Auslassventils zu erreichen.

Weiters kann auch vorgesehen sein, dass zur Erhöhung des Turbulenzniveaus einer von mehreren Einlasskanälen pro Zylinder abgeschaltet wird. Genauso ist es möglich, zur Erhöhung des Turbulenzniveaus eine Drallverstelleinrichtung im Einlasskanal zu aktivieren.

Zusätzlich zur kurzfristigen Erhöhung des Turbulenzniveaus kann auch vorgesehen sein, dass kurzfristig die Fremdzündung, vorzugsweise in einem Bereich von etwa 50° bis 10° Kurbelwinkel vor dem oberen Totpunkt der Zündung, aktiviert wird, um den Verbrennungsablauf zu beeinflussen, da aufgrund der Fremdzündung Vorreaktionen im Brennraum ablaufen und somit die Verbrennungslage verschoben wird.

Um eine Regelung der Verbrennung mit dem Verbrennungsstabilisator zu ermöglichen, ist es notwendig, für den stationären Motorbetrieb Kennfelder in einer Motorsteuerung abzulegen, aus denen für den jeweiligen stationären Betriebspunkt die notwendige rückzuführende Abgasmasse und die notwendige anzusaugende Frischluftmasse ausgelesen werden. Im einfachsten Fall können dies auch Kennfelder sein, in denen für den jeweiligen Betriebspunkt die Gaswechselventilparameter, wie zum Beispiel Öffnungszeitpunkt und Öffnungsdauer abgelegt sind. Diese Kennfelder dienen als Vorsteuerung und sind auf Normumgebungsbedingungen bezogen. Wird die Normumgebungstemperatur verlassen, wird anhand einer Temperaturkennlinie für den Einlassöffnungswinkel die Vorsteuerung korrigiert. Alle weiteren Störgrößen wie zum Beispiel ein schneller Lastpunktwechsel, werden durch den Verbrennungsregler ausgeregelt.

Der Verbrennungsregler erfasst zunächst über der aktuellen Motordrehzahl und dem gemessenen indizierten Mitteldruck den aktuellen Betriebspunkt der Verbrennungskraftmaschine, um im nächsten Schritt den Sollwert für die Verbrennungslage zu bestimmen. Dieser Sollwert kann ein konstanter Wert für den gesamten Betriebsbereich sein, oder auch in Abhängigkeit vom Betriebspunkt unterschiedliche Werte annehmen. Anschließend wird aus einem Kennfeld der elektrische Öffnungswinkel des Einlassventils ausgelesen, der sich beim gewünschten Betriebspunkt unter stationären Bedingungen einstellt. Dieser Winkelwert wird anschließend über eine temperaturabhängige Kennlinie korrigiert und steht dann dem Verbrennungsregler als Vorsteuerwert zur Verfügung. Mit Hilfe der Referenzverbrennungslage für den stationären Fall und dem aus z-Arbeitszyklen gemittelten Wert des 50%-Massenumsatzpunktes (wobei z Werte zwischen 1 und 10 annehmen kann) wird die Regelabweichung gebildet und einem Regler zugeführt. Aufgrund der Regelabweichung wird das Turbulenzniveau im Brennraum entsprechend erhöht. In einem weiteren Schritt ist vorgesehen, dass nach erfolgter Verbrennungsstabilisierung das Turbulenzniveau wieder auf einen, dem jeweiligen stationären Motorbetriebspunkt entsprechenden Wert verändert wird.

Die Erfindung wird im Folgenden anhand der Figuren näher erläutert. Es zeigen
- Fig. 1: die Abhängigkeit der Verbrennungslage von der Ansauglufttemperatur,
- Fig. 2: die Abhängigkeit der Verbrennungslage vom Einlassventilöffnungswinkel,
- Fig. 3: die Abhängigkeit des Frischluftmassenstroms vom Einlassöffnungswinkel,
- Fig. 4: eine schematische Ablaufsteuerung des erfindungsgemäßen Verbrennungsreglers,
- Fig. 5: den prinzipiellen Hubverlauf der Gaswechselventile im HCCI-Betrieb und
- Fig. 6: ein Motorkennfeld mit unterschiedlichen Betriebsbereichen.

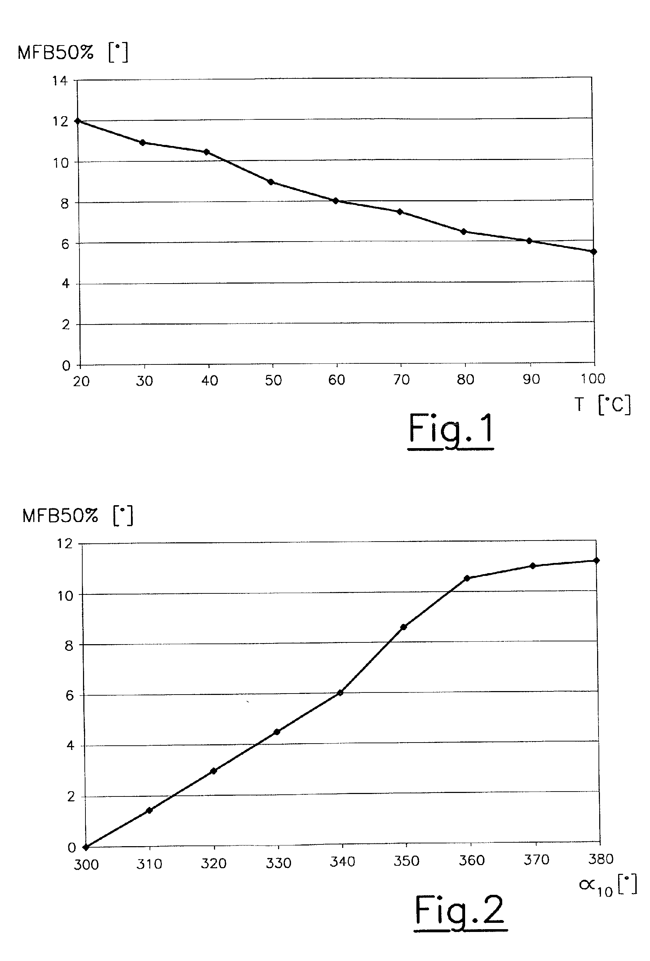

Fig. 1 zeigt die Abhängigkeit der Verbrennungslage, und zwar des 50%-Massenumsatzpunktes MFB 50% - gemessen in Grad Kurbelwinkel vor dem oberen Totpunkt OT der Zündung - von der Ansauglufttemperatur T. Dabei zeigt sich, dass die Lage der Verbrennung immer weiter in Richtung des oberen Totpunktes OT der Zündung wandert, je höher die Ansauglufttemperatur T und in weiterer Folge auch die Mischtemperatur T_{misch} der Zylinderladung zu Beginn der Kompressionsphase ist.

Das erfindungsgemäße Verfahren macht sich die Tatsache zu Nutze, dass Ladungsbewegung beziehungsweise Turbulenz den Brennverlauf beschleunigt. Eine sehr effektive Maßnahme zur Beeinflussung des Turbulenzniveaus im Brennraum besteht darin, die Öffnungszeitpunkte der Gaswechselventile entsprechend zu verstellen.

Fig. 2 zeigt den prinzipiellen Einfluss des Öffnungsbeginnes α_{IO} in Grad Kurbelwinkel auf die Verbrennungslage MFB 50%. Daraus ist ersichtlich, dass beim frühen Öffnen des Einlassventils die Verbrennung wesentlich später abläuft, als beim späten Öffnen des Einlassventils, wenn alle anderen Parameter konstant gehalten werden. Somit kann durch Verschiebung des Einlassbeginnes die Lage der Verbrennung und somit auch der Wirkungsgrad der Brennkraftmaschine beeinflusst werden. Negative Auswirkungen auf die Ladungswechselarbeit können vermieden werden, wenn die Verstellung des Einlassbeginnes zur Turbulenzerhöhung nur als kurzer, der Stabilisierung der Verbrennung dienender Eingriff genutzt wird.

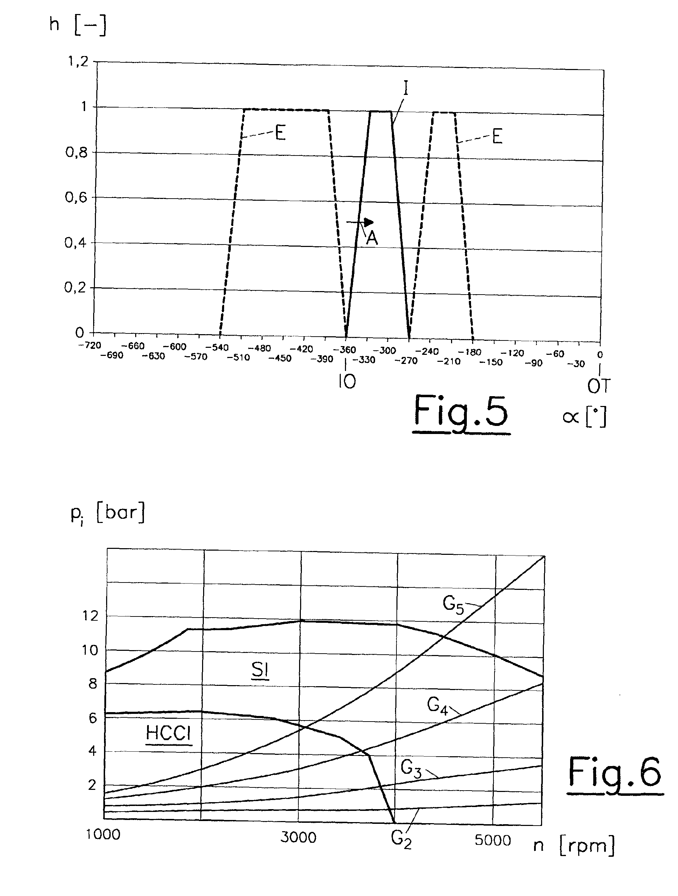

In Fig. 5 ist der normierte Ventilhub h über dem Kurbelwinkel α aufgetragen. Die Ventilerhebung der Einlassventile ist mit I, die der Auslassventile mit E bezeichnet. Die zweite Ventilerhebung E der Auslassventile zwischen 270° und 180° dient der Abgasrückführung. Üblicherweise befindet sich der Einlassbeginn IO zwischen 380° bis 360° Kurbelwinkel vor dem oberen Totpunkt OT der Zündung. Wird der Öffnungsbeginn IO kurzfristig entsprechend dem Pfeil A in Richtung des oberen Totpunktes OT der Zündung verschoben, so kann das Turbulenzniveau im Brennraum kurzfristig erhöht und in weiterer Folge die Verbrennungslage MFB 50% vorverschoben werden, wodurch die Verbrennung stabilisiert werden kann. Nach erfolgter Stabilisierung wird der Einlassbeginn IO wieder auf den für den entsprechenden Betriebspunkt erforderlichen Wert rückgestellt.

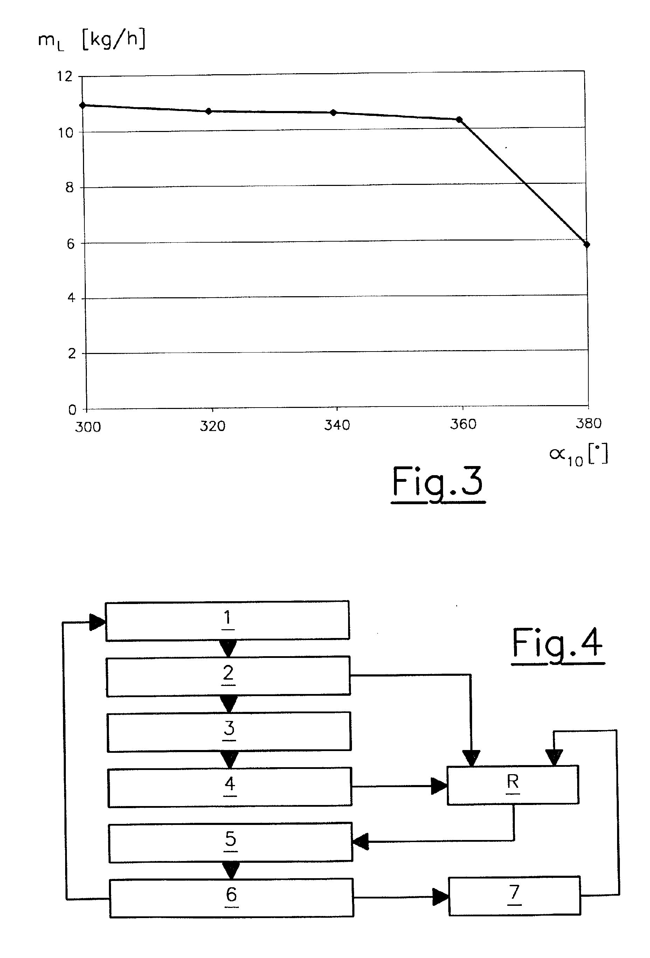

Da bei Verstellung des Einlassöffnungszeitpunktes IO auch die Ladung beeinflusst wird, muss auch die angesaugte Frischluftmasse über der Einlassöffnungsdauer korrigiert werden. In Fig. 3 ist beispielhaft die Frischluftfüllung m_{L} in Abhängigkeit des Einlassöffnungswinkels α_{IO} bei konstanter Einlassöffnungsdauer dargestellt. Bei allen Figuren, die über dem Einlassöffnungswinkel α_{IO} dargestellt sind, ist zu berücksichtigen, dass es sich bei den angegebenen Winkeln um Ansteuerungsparameter handelt. Die tatsächlichen Öffnungswinkel weichen deshalb von diesen Winkelangaben ab.

Damit der Verbrennungsstabilisator arbeiten kann, ist es notwendig, für den stationären Motorbetrieb Kennfelder zu hinterlegen, aus denen für den jeweiligen stationären Betriebspunkt die notwendige rückzuführende Abgasmasse und die notwendige anzusaugende Frischluftmasse m_{L} ausgelesen werden. Im einfachsten Fall können dies auch Kennfelder sein, in denen für den jeweiligen Betriebspunkt die Gaswechselventilparameter, wie zum Beispiel Öffnungszeitpunkt und Öffnungsdauer abgelegt sind. Diese Kennfeldwerte dienen als Vorsteuerung und sind auf Normumgebungsbedingungen bezogen. Wird die Normumgebungstemperatur verlassen, wird anhand der Kennlinie in Fig. 1 die Vorsteuerung korrigiert. Alle weiteren Störgrößen, wie zum Beispiel ein schneller Lastpunktwechsel, werden durch den Regler R ausgeregelt. Ein Ablaufdiagramm dieses Verbrennungsreglers ist in Fig. 4 dargestellt.

Der Verbrennungsregler R erfasst zunächst in Schritt 1 über der aktuellen Motordrehzahl n und dem gemessenen indizierten Mitteldruck pᵢ den aktuellen Betriebspunkt der Brennkraftmaschine, um im nächsten Schritt 2 den Sollwert für die Verbrennungslage MFB 50% zu bestimmen. Dieser Sollwert kann ein konstanter Wert für den gesamten Betriebsbereich sein, oder auch in Abhängigkeit vom Betriebspunkt unterschiedliche Werte annehmen. Anschließend wird im Schritt 3 aus einem Kennfeld der elektrische Öffnungswinkel α_{IO} des Einlassventils ausgelesen, der sich beim gewünschten Betriebspunkt unter stationären Bedingungen einstellt. Dieser Winkelwert wird anschließend über eine temperaturabhängige Kennlinie im Schritt 4 korrigiert und steht dann dem Regler R als Vorsteuerwert zur Verfügung. Der Vorsteuerwert wird im Schritt 5 der Ventilsteuereinrichtung zugeführt. In Schritt 6 werden verbrennungsrelevante Kenngrößen nach erfolgter Verbrennung erfasst und in Schritt 7 über z-Arbeitszyklen gemittelt. Mit Hilfe der Referenzverbrennungslage für den Stationärbetrieb und dem aus den z-Arbeitszyklen gemittelten MFB 50%-Wert (wobei z Werte zwischen 1 und 10 annehmen kann) wird die Regelabweichung gebildet und dem Regler R zugeführt. Der Reglerausgang kann auf ein Stellgrößensignal normiert werden, so dass der stationäre Vorsteuerwert des Einlassöffnungswinkels α_{IO} mit dem Reglerausgang moduliert wird.

Fig. 6 zeigt exemplarisch ein Motorkennfeld, in welchem der indizierte Zylinderdruck pᵢ über der Drehzahl n aufgetragen ist. Der homogene Selbstzündungsbetrieb HCCI findet im unteren Teillastbereich statt. Im mittleren und höheren Teillastbereich, sowie an der Volllast wird die Brennkraftmaschine homogen fremdgezündet betrieben. Dieser Betriebsbereich ist mit SI gekennzeichnet. Die Linien G₂, G₃, G₄, G₅ deuten verschiedene Getriebeübersetzungen an.

## Patentansprüche

1. Verfahren zum geregelten Betrieb einer Brennkraftmaschine, welche zumindest in einem Motorbetriebsbereich homogen selbstgezündet betrieben wird, wobei der Verbrennungsablauf durch Messen zumindest einer verbrennungsrelevanten Kenngröße aus der Gruppe Verbrennungsbeginn, Verbrennungsdauer und Verbrennungsrate überwacht und ausgewertet wird, und aufgrund der Verbrennungsauswertung zumindest ein verbrennungsrelevanter Parameter für die nächstfolgenden Verbrennungen geregelt wird, **dadurch gekennzeichnet, dass** zur Regelung der Verbrennung das Turbulenzniveau im Brennraum verändert wird, wobei zur Stabilisierung der Verbrennung das Turbulenzniveau kurzfristig erhöht wird.

2. Verfahren nach Anspruch 1, **dadurch gekennzeichnet, dass** zur Erhöhung des Turbulenzniveaus der Öffnungszeitpunkt zumindest eines Einlassventils in Richtung des oberen Totpunktes der Zündung verschoben wird.

3. Verfahren nach Anspruch 1 oder 2, **dadurch gekennzeichnet, dass** zur Erhöhung des Turbulenzniveaus einer von mehreren Einlasskanälen pro Zylinder während des Einlasstaktes abgeschaltet wird.

4. Verfahren nach einem der Ansprüche 1 bis 3, **dadurch gekennzeichnet, dass** zur Erhöhung des Turbulenzniveaus eine Drallverstelleinrichtung in zumindest einem Einlasskanal aktiviert wird.

5. Verfahren nach einem der Ansprüche 1 bis 4, **dadurch gekennzeichnet, dass** das Turbulenzniveau durch Verschieben der Überschneidung zwischen Auslassventilöffnung und Einlassventilöffnung verändert wird.

6. Verfahren nach einem der Ansprüche 1 bis 5, wobei zumindest ein Auslassventil während des Einlasstaktes geöffnet wird, **dadurch gekennzeichnet, dass** das Turbulenzniveau durch Verschieben der Auslasssteuerzeit während des Einlasstaktes verändert wird.

7. Verfahren nach einem der Ansprüche 1 bis 6, **dadurch gekennzeichnet, dass** kurzfristig eine Fremdzündungseinrichtung vorzugsweise in einem Bereich von etwa 50° bis 10° Kurbelwinkel vor dem oberen Totpunkt der Zündung aktiviert wird.

8. Verfahren nach einem der Ansprüche 1 bis 7, **dadurch gekennzeichnet, dass** als verbrennungsrelevante Kenngröße der 50%-Massenumsatzpunkt erfasst wird.

9. Verfahren nach einem der Ansprüche 1 bis 8, **dadurch gekennzeichnet, dass** der Verbrennungsablauf mittels einer Echtzeitzylinderdruckauswertung überwacht wird.

10. Verfahren nach einem der Ansprüche 1 bis 9, **dadurch gekennzeichnet,**
**dass** für den stationären Motorbetrieb Kennfelder für die rückzuführende Abgasmenge und die anzusaugende Frischluftmasse in einer Motorsteuerung abgelegt werden,
**dass** mittels eines Verbrennungsreglers die aktuelle Motordrehzahl und der gemessene indizierte Mitteldruck erfasst und der aktuelle Betriebspunkt der Brennkraftmaschine bestimmt wird,
wobei aufgrund des aktuellen Betriebspunktes durch Vergleiche mit einem Kennfeld für den stationären Motorbetrieb ein Sollwert für die Verbrennungslage und aus dieser ein Sollwert für den Öffnungswinkel zumindest eines Einlassventils bestimmt wird,
und **dass** der Sollwert für den Öffnungswinkel des Einlassventils über eine temperaturabhängige Kennlinie korrigiert wird und dieser temperaturkompensierte Sollwert für den Öffnungswinkel als Vorsteuerwert für die Ventilbetätigung verwendet wird.

11. Verfahren nach Anspruch 10, **dadurch gekennzeichnet, dass** die aktuelle Verbrennungslage für eine vordefinierte Anzahl von Arbeitszyklen gemittelt wird und mit der im Kennfeld abgelegten Referenzverbrennungslage für den stationären Fall verglichen wird,
und dass aufgrund der Regelabweichung das Turbulenzniveau im Brennraum entsprechend angepasst, vorzugsweise erhöht wird.

12. Verfahren nach Anspruch 11, **dadurch gekennzeichnet, dass** nach erfolgter Verbrennungsstabilisierung das Turbulenzniveau wieder auf einen, dem jeweiligen stationären Motorbetriebspunkt entsprechenden Wert gesenkt wird.
